# EUROPÄISCHE PATENTANMELDUNG

(11) **EP 0 726 093 A1**
(43) Veröffentlichungstag der Anmeldung: **14.08.1996**
(21) Anmeldenummer: 95120511.1
(22) Anmeldetag: 23.12.1995
(51) Int. Cl.: B01J 23/889, C02F 1/72

(54) **Katalysator zur Oxidation von Abwasserverunreinigungen**

(30) Priorität: 07.02.1995 DE 19503865
(71) Anmelder: Krupp VDM GmbH, D-58791 Werdohl (DE)
(72) Erfinder: Heubner, Ulrich, Dr.-Ing., D-58791 (DE); Herda, Wilfried, Dipl.-Ing., D-40489 Düsseldorf (DE); Koppe, Jürgen, Dr.rer.nat., D-06258 Schkopau (DE); Lausch, Hartmut, Dr.rer.nat., D-06128 Halle (DE)
(74) Vertreter: Cohausz & Florack

(57) **Zusammenfassung**

Die Erfindung betrifft einen vollmetallischen Katalysator zur Oxidation von Abwasserverunreinigungen in Gegenwart von Wasserstoffperoxid und Sauerstoff. Kennzeichen der Erfindung ist, daß der Katalysator aus einer für eine Zeit von 0,25 bis 5 Stunden bei Temperaturen von 400 bis 1.000 °C in sauerstoffhaltiger Atmosphäre thermisch behandelten Legierung aus 10 bis 30 Gew.-% Kupfer und 5 bis 15 Gew.-% Nickel, Rest 60 bis 80 Gew.-% Mangan besteht.

## Beschreibung

Die Erfindung betrifft einen vollmetallischen Katalysator zur Oxidation von Abwasserverunreinigungen in Gegenwart von Wasserstoffperoxid und Sauerstoff.

Es ist bekannt, Abwasserverunreinigungen, die einer biologischen Abwasserreinigung aus Gründen der Toxizität nicht zugeführt werden können, in Gegenwart von Katalysatoren und Wasserstoffperoxid sowie Sauerstoff oxidativ zu entfernen. Der Sauerstoff liegt dabei entweder gelöst im Wasser vor oder es wird zusätzlich noch Luftsauerstoff in das Abwasser eingetragen. Aufgabe des Katalysators ist es, das Wasserstoffperoxid so zu "aktivieren", daß durch die Produkte der "Aktivierung" die oxidierbaren Verunreinigungen in Kohlendioxid und Wasser und/oder nichttoxische organische Substanzen sowie mineralische Reststoffe umgewandelt werden.
Geeignet ist hierfür das auf Eisen(II)-Ionen beruhende FENTON'sche Reagenz beziehungsweise Modifikationen dieses Sytems [DE-OS 2927911 und DE-OS 2927912].
Probleme beim praktischen Einsatz dieses Stoffsystems bestehen im folgenden:
"...Ein...Hindernis für eine erfolgreiche Verbreitung von FENTON's Reagenz in technischem Umfang stellt der anfallende Eisen(III)-hydroxidschlamm dar, der bei der in der Praxis erforderlichen Neutralisation der gereinigten Lösung mittels Kalkmilch anfällt. Dieser muß wegen seiner Belastung mit noch nicht umgesetzten Schadstoffen praktisch immer als Sondermüll deponiert werden.
Darüber hinaus müssen die meisten Abwässer für eine erfolgreiche Behandlung mit FENTON's Reagenz erst auf pH = 2 bis 4 eingestellt werden, was eine zusätzliche Salzfracht bedeutet, die sich unter Umständen negativ auf die Fischtoxizität des gereinigten Abwassers auswirken kann..." [J. EIGNER: Dissertation, S.108, München 1990].

Eine "Aktivierung" des Wasserstoffperoxids mittels UV-Licht und/oder Ozon, gegebenfalls auch in Gegewart einer TiO₂-Suspension, erfordert je nach Gehalt an Verunreinigungen im Abwasser Energiemengen von 100 bis 500kWh/m³ Abwasser. Diese Energiemengen wandeln sich letztlich in Wärme um, die dem Aufbereitungssystem wieder durch Kühlung entzogen werden muß.
Weitere Probleme bei der Anwendung von UV-Licht bestehen darin, daß es in trüben und/oder gefärbten Lösungen unzureichend zur Wirkung gelangt.
Der gegenwärtige Stand der naßoxidativen Abwasserbehandlung läßt sich folgendermaßen zusammenfassen:
"Die steigenden Anforderungen an den Umweltschutz haben in den letzten Jahren u.a. auch im Bereich der Abwasserreinigung einen erheblichen Entwicklungsschub ausgelöst, da sich die verschärften Einleitungsbedingungen für Abwässer in der Regel nur mit verbesserten oder neuen Verfahren einhalten lassen. Um die mit den steigenden technischen Aufwand verbundenen Investitions- und Betriebskosten zu bremsen, müssen...Lösungen erarbeitet werden.
Hier bietet sich für bestimmte Aufgaben die Naßoxidation...an. Nachteilig für einen verbreiteten Einsatz wirken sich jedoch die hohen Behandlungskosten aus..." [A. VOGELPOHL: Naßoxidative Abwasserbehandlung, CUTEC-Schriftenreihe 8, Clausthal 1993].
Der Erfindung liegt nun die Aufgabe zugrunde, einen einfach aufgebauten, leicht zu entsorgenden und leistungsfähigen Katalysator zur Oxidation von Abwasserverunreinigungen mittels Wasserstoffperoxid und Sauerstoff zu entwickeln, der insbesondere auch im alkalischen Bereich aktiv ist.

Diese Aufgabe wird erfindungsgemäß durch einen Katalysator aus einer für eine Zeit von 0,25 bis 5 Stunden bei Temperaturen von 400 bis 1.000 °C in sauerstoffhaltiger Atmosphäre thermisch behandelten Legierung aus 10 bis 30 Gew.-% Kupfer und 5 bis 15 Gew.-% Nickel, Rest 60 bis 80 Gew.-% Mangan gelöst.

Überraschenderweise wirkt dieser Katalysator auch im alkalischen Bereich, so daß eine separate Einstellung eines sauren Arbeitsbereiches, wie beim Einsatz von Eisen(II)-Ionen, entfällt.

Dieser Katalysator kann in Form von Draht, Blech, Spänen, Pulver oder einer anderen Form vorliegen, die die Ausbildung einer hinreichend großen wirksamen Oberfläche gewährleistet.
Insbesondere die Ausführungsformen. Draht und dünnes Blech gestatten die Einbringung des Katalysators in Abwasserströme bei Einhaltung eines sehr geringen Strömungswiderstandes.

Der Katalysator kann bevorzugt zusätzlich zu den bereits genannten Legierungskomponenten zusätzlich noch mindestens eines der Elemente Eisen, Chrom, Silizium, Titan, Aluminium, Molybdän, Phosphor, Stickstoff in einer Menge bis 5 Gew.-% insgesamt enthalten.

Durch eine thermische Behandlung in sauerstoffhaltiger Atmosphäre für eine Zeit von 0,25 bis 5 Stunden bei Temperaturen von 400 bis 1.000 °C kann ein etwaiger Abfall in der Aktivität des Katalysators kompensiert werden.

Ein nicht mehr regenerierbarer Katalysator wird eingeschmolzen und steht dann erneut als Legierunsmaterial für die Katalysatorherstellung zur Verfügung.
Der erfindungsgemäße Katalysator bewirkt in Gegenwart von Wasserstoffperoxid die Oxidation von Abwasserverunreinigungen, wobei durch den im Abwasser gelösten Sauerstoff eine zusätzliche Unterstützung dieser Oxidation auftritt. Durch Einblasen von weiterem Sauerstoff, vor allem in Form von Luft, kann dieser Effekt noch verstärkt werden.
Die Erfindung wird durch nachfolgende Beispiele näher erläutert.

### Beispiele

### 1. Versuche mit Formkatalysator

1 kg Bohrspäne eines Werkstoffes mit der Zusammensetzung 10 Gew.-% Nickel, 72 Gew.-% Mangan, 17 Gew.-% Kupfer (Rest: Eisen, Chrom, Phosphor, Aluminium, Silizium, Titan) wurden 1 Stunde lang bei einer Temperatur von 550 °C unter Luftatmosphäre im Muffelofen geglüht. Die nach dem Abkühlen erhaltenen Späne sind mechanisch stabil und lassen sich nicht zu Pulver zerreiben.

### Beispiel 1

1 kg dieses Formkatalysators wurde in 1 l eines braun gefärbten, trüben, phenolisch riechenden alkalischen Abwassers (pH = 10) gegeben. Dieses Abwasser enthielt u.a. 5 mg/l Cyanid. Der Chemische Sauerstoffbedarf (der CSB-Wert) betrug 1 g/l. Bei einer Temperatur von 20 °C wurde der doppelte Überschuß an Wasserstoffperoxid der gerührten Lösung zugesetzt. Nach einer Zeit von 20 Minuten waren über 95 % der organischen Verunreinigungen - gemessen mittels der Extinktion bei 330 nm - oxidiert. Der Cyanidgehalt lag unter 1 mg/l. Das behandelte Abwasser war klar, farblos und geruchlos.

Im Anschluß daran wurde das gereinigte Abwasser abgetrennt und der Katalysator erneut in 1 l Abwasser der gleichen Zusammensetzung gegeben. Auch hierbei wurden dieselben Resultate nach der Wasserstoffperoxidzugabe gemessen.

Diese Vorgehensweise wurde insgesamt 10 mal wiederholt. Nach dem zehnten Mal wurden statt 20 Minuten 25 Minuten zur Erzielung des gewünschten Abbaus an Verunreinigungen benötigt. Der Katalysator wurde deshalb abgetrennt, gewaschen, getrocknet und 1 Stunde lang im Muffelofen bei 450 °C unter Luftatmosphäre geglüht.

Im Anschluß daran zeigte er wieder die ursprüngliche katalytische Aktivität.

### Beispiel 2

1 l eines Abwassers der gleichen Zusammensetzung wie im Beispiel 1 wurde mit Wasserstoffperoxid behandelt. Nach 30 Minuten war das Abwasser noch immer braun gefärbt. Es roch stark nach Phenol. Der Cyanidgehalt lag zwischen 2 und 3 mg/l.

Dieser Versuch zeigte, daß die gewünschte oxidative Wirkung des Katalysators in Gegenwart von Wasserstoffperoxid allein ohne Sauerstoff nicht eintritt.

### 2. Versuche mit Pulverkatalysator

1 kg Bohrspäne eines Werkstoffes mit der gleichen Zusammensetzung wie im Beispiel 1 wurde 1 Stunde lang bei 800 °C unter Luftatmosphäre im Muffelofen geglüht, anschließend aus dem Muffelofen genommen und nach dem Abkühlen zu Pulver zermahlen.

### Beispiel 3

In 0,5 l einer wäßrigen Lösung, die 5 mg Methylenblau enthielt, wurde 1 g dieses Pulverkatalysators gegeben. Diese Lösung wurde bei einer Temperatur von 25 °C mit 10 ml einer 35 %igen Wasserstoffperoxidlösung versetzt und gerührt.

Die Halbwertzeit des Abbaus des Methylenblaus - gemessen anhand der Extinktion bei 660 nm - betrug 60 Minuten.

### Beispiel 4

0,5 l einer Lösung der gleichen Zusammensetzung wie im Beispiel 3 wurden mit 10 ml einer 35 %igen Wasserstoffperoxidlösung behandelt. Bei 25 °C betrug die Halbwertzeit des Methylenblauabbaus 170 Minuten.

Dieses Beispiel zeigt das Ergebnis einer Abwasserbehandlung ohne Zugabe von Katalysator. Im Vergleich zu Beispiel 3 erfolgt hier die Oxidation des als Verunreinigung zugegebenen Methylenblau wesentlich langsamer und somit die Reinigung wesentlich schleppender, wenn lediglich Wasserstoffperoxidlösung ohne Katalysator hinzugegeben wird.

## Patentansprüche

1. Katalysator zur Oxidation von Abwasserinhaltsstoffen in Gegenwart von Wasserstoffperoxid und Sauerstoff,
**dadurch gekennzeichnet,** daß er aus einer für eine Zeit von 0,25 bis 5 Stunden bei Temperaturen von 400 bis 1.000 °C in sauerstoffhaltiger Atmosphäre thermisch behandelten Legierung aus 10 bis 30 Gew.-% Kupfer und 5 bis 15 Gew.-% Nickel, Rest 60 bis 80 Gew.-% Mangan besteht.

2. Katalysator nach Anspruch 1,
**dadurch gekennzeichnet,** daß der Katalysator in Form von Draht, Blech, Spänen oder Pulver vorliegt.

3. Katalysator nach Anspruch 1 und 2,
**dadurch gekennzeichnet,** daß er zusätzlich mindestens eines der Elemente Eisen, Chrom, Silizium, Titan, Aluminium, Molybdän, Phosphor, Stickstoff in einer Menge bis 5 Gew.-% insgesamt enthält.

4. Katalysator nach Anspruch 1 bis 3,
**dadurch gekennzeichnet,** daß er bei einem Abfall in der katalytischen Aktivität durch eine thermische Behandlung nach Anspruch 1 regenerierbar ist.
